Europäisches Patentamt

**European Patent Office**

Office européen des brevets

(11) Publication number: **0 124 269**
**A1**

(12) **EUROPEAN PATENT APPLICATION**

(21) Application number: **84302155.1**

(22) Date of filing: **29.03.84**

(51) Int. Cl.³: **B 65 G 47/22**

(30) Priority: **30.03.83 DK 1453/83**

(43) Date of publication of application: **07.11.84**
**Bulletin 84/45**

(84) Designated Contracting States: **BE DE NL**

(71) Applicant: **Rockwool International A/S, 501, Hovedgaden, DK-2640 Hedehusene (DK)**

(72) Inventor: **Kjellsson, Kjell Albrecht, 493, Hovedgaden, DK-2640 Hedehusene (DK)**

(74) Representative: **Prentice, Raymond Roy, R.R. Prentice & Co. 34 Tavistock Street, London WC2E 7PB (GB)**

(54) **Orienting device.**

㊗ Device with an orienting capability comprising conical rollers (2) cooperating with a vertical conveyor (3) belt driven at variable speed for turning and reorienting bodies (4) in either direction during transportation.

## ORIENTING DEVICE

The invention relates to a device for orienting workpieces and the like bodies during transportation on a substantially straight conveyor run and comprising a number of parallel, conical rollers.

In DOS 2,848,820 a conveyor of this type is shown. On this conveyor, all bodies passing the conical rollers are turned for example $90^{\circ}$ in the same direction with respect to their original orientation simultaneously with a continuous transport. A drawback of this type of conveyor is that all the conveyed bodies are turned during their conveyance, which may not be desirable in case of bodies being delivered at a random orientation and only some of the bodies have to be turned.

An object of the invention is to eliminate this drawback of the known conveyor or in other words to be able to bypass bodies without turning or accelerating the turning on the device.

The device according to the invention is characterized by a driven vertical conveyor belt arranged at one side of the conveyor run, the conical rollers forming an angle with the conveyor belt of less than $90^{\circ}$.

The angled rollers tend to press the conveyed bodies against the vertical belt, which, if driven with the same speed as the average peripheral speed of the rollers, will enable the bodies to pass the conveyor without being turned, and if stopped will help the bodies in their turning or if driven in opposite direction of the rollers will accelerate the turning, or further if the vertical conveyor belt is driven with a speed exceeding the average peripheral speed of the rollers, the body may even be turned in the other direction.

It has been found that the conical shape of the rollers apart from inducing a small turning momentum on the conveyed bodies modifies the frictional conditions between the bodies and the rollers in such a way that the vertical belt may comparatively easily turn the conveyed bodies in either direction.

According to the invention the speed and direction of movement is variable in order to selectively control the orientation of the bodies after passage of the device.

In the following the invention will be described in detail with reference to the drawing, in which:

Fig. 1 shows a plan of a conveyor.

Fig. 2 shows a section along the line A-A in fig. 1.

Fig. 3 shows an embodiment of a conical roller.

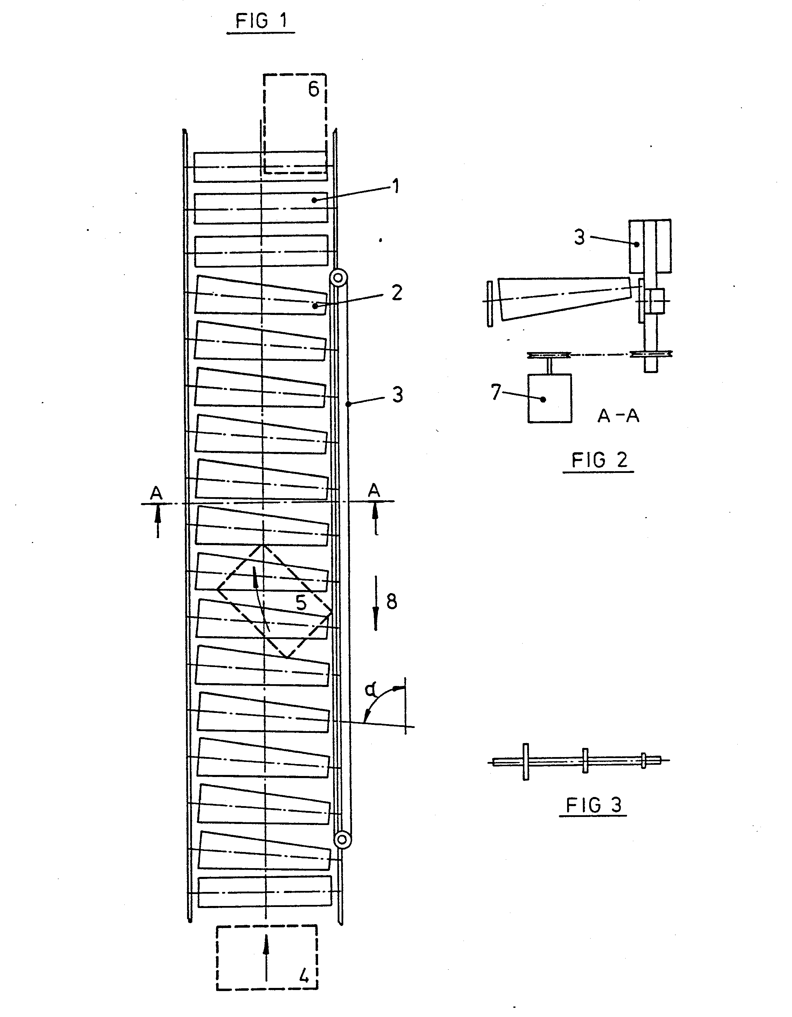

In fig. 1 the normal rollers are referenced by 1, and the conical rollers are referenced by 2. The body 4, the longitudinal axis of which is perpendicular to the axis of the conveyor, is accelerated at one side by the conical rollers 2 because of the increased diameter and peripheral speed and slowed down at the other side by the reduced peripheral speed of the rollers.

The body 5 has been turned $45^{\circ}$ and the body 6 has been turned $90^{\circ}$ compared with the body 4. This turning will in the following be termed a clockwise turning.

The top surface of the rollers 2 is level with the top surface of the rollers 1, the conical rollers being mounted in for example spherical ball bearings or rotable by means of bearingsmounted in the rollers.

After termination of the desired turning of the body on the conveyor the body still have some rotational energy tending to continue the rotational movement of the body. By reducing the number of conical rollers, by modifying the tapering of the rollers, and by applying a vertical conveyor belt 3 the excess rotation may be stopped. The conditions must be adapted to the speed of the conveyor, the mass of the bodies and in exteme cases empirical adaptation must be used.

The conical rollers may have a continuous conical surface or may comprise discs of increasing size mounted on a shaft. The discs may be arranged in close relationship or may be spaced; for example 3 or 4 discs may be mounted on a shaft to form a conical roller as shown in fig. 3.

The rollers or at least some of the rollers may be lined with rubber or a similar friction material, and the rollers may be driven by means of a common chain or belt drive or a gear transmission - or possibly an individual drive at an individual speed for each roller. The vertical conveyor belt 3 is driven by a motor (7).

In case the body is correctly oriented, and no turning is required, the vertical conveyor belt is started with a direction (8) and speed corresponding to the peripheral speed of the rollers at their largest diameter.

By arranging the conical rollers with their axes forming an angle $\alpha$ differing from a right angle and in such a way that the angle $\alpha$ with respect to the vertical conveyor 3 is less than $90^\circ$, a close contact between the bodies and the conveyor belt 3 is ensured, the bodies being urged against the conveyor 3 owing to the angling of the rollers.

Surprisingly, it has been found that the friction between the body and the vertical conveyor belt 3 is greater than - and therefore dominating - the friction between the bodies and the conical rollers at the end having the smaller diameter. As shown in fig. 1 the body 4 - in case the body is not to be reoriented - is transported by the force from the end of the rollers having the larger diameter and by the force from the vertical conveyor belt, and the orientation of the body 4 will remain unchanged after passage of the conveyor.

In case it is desired to turn the bodies anti-clockwise, the speed of the vertical conveyor belt is increased for example to twice the peripheral speed of the end of the conical rollers having the larger diameter, and this will turn the body in a direction opposite the arrow on the body 5.

An increased turning speed of clockwise turns may be obtained by stopping the vertical conveyor belt 3. If the vertical conveyor belt 3 is driven opposite the direction of the arrow 8, the body will turn even faster. This operation of the vertical conveyor may be used to reduce the required number of conical rollers.

If a turning of the body is not desired, the vertical conveyor belt is started in a direction marked with the arrow 8 and at a predetermined speed.

To perform an anti-clockwise turn the vertical conveyor belt 3 is driven at an increased speed in the direction of the arrow (8).

Signals for controlling the operation of the vertical conveyor belt may be produced by photo-cells, sensors or microswitches, etc., corresponding to the nature of the conveyed bodies.

The effect of the vertical conveyor belt 3 may be increased by a suitable choice of surface structure, which may for example be soft and resilient or coarse with high friction depending on the nature of the goods to be transported.

The conveyor according to the invention is able to reorient or turn the bodies during the passage by $0^{\circ}$, $30^{\circ}$, $45^{\circ}$, $90^{\circ}$ or $180^{\circ}$ by a suitable arrangement of the rollers, their number and by controlling the speed of the vertical conveyor belt as well as by choosing the direction of turn. The conveyor according to the invention may, therefore, perform three functions, which previously required three different types of conveyors with subsequent cost and space requirements.

0124269

1

CLAIMS:

1.    Device for reorienting workpieces and the like
bodies during transportation on a substantially straight conveyor run and comprising a number of parallel, conical
rollers, c h a r a c t e r i z e d by a driven vertical
conveyor belt arranged at one side of the conveyor run,
the conical rollers forming an angle with the conveyor
belt of less than 90$^{\circ}$.
2.    Device according to claim 1, c h a r a c t e r i z e d
in that the speed and direction of movement of the con-
veyor belt is variable.

0124269

FIG 1

FIG 2

A-A

FIG 3

**European Patent Office**

**EUROPEAN SEARCH REPORT**

Application number

| | DOCUMENTS CONSIDERED TO BE RELEVANT | | EP 84302155.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| D,Y | DE - A1 - 2 848 820 (ENZINGER-UNION-WERKE AG) <br>     * Totality * <br>     -- | 1 | B 65 G 47/22 |
| Y <br> A | DE - A - 2 034 631 (WEMHÖNER KG) <br>     * Totality * <br>     ---- | 1 <br> 2 | |
| | | | **TECHNICAL FIELDS SEARCHED (Int. Cl. ³)** |
| | | | B 65 G |

The present search report has been drawn up for all claims

| Place of search | Date of completion of the search | Examiner |
|---|---|---|
| VIENNA | 05-07-1984 | PISSENBERGER |